# EUROPEAN PATENT SPECIFICATION

(11) **EP 3 833 792 B1**
(45) Date of publication and mention of the grant of the patent: **07.09.2022**
(21) Application number: 19752269.1
(22) Date of filing: 05.08.2019
(51) Int. Cl.: C22C 9/04, C22B 7/00, C22F 1/08

(54) **METHOD FOR OBTAINING A BRASS BILLET WITH REDUCED LEAD CONTENT AND THE BILLET THUS OBTAINED**
VERFAHREN ZUR HERSTELLUNG EINES MESSINGBARRENS MIT REDUZIERTEM BLEIGEHALT UND DADURCH ERHALTENER BARREN
PROCÉDÉ D'OBTENTION D'UNE BILLETTE DE LAITON À TENEUR EN PLOMB RÉDUITE ET BILLETTE AINSI OBTENUE

(30) Priority: 10.08.2018 IT 201800008041
(43) Date of publication of application: 16.06.2021
(73) Proprietor: A.L.M.A.G. S.p.A. Azienda Lavorazioni Metallurgiche Ed Affini Gnutti, 25030 Roncadelle, Brescia (IT)
(72) Inventor: GNUTTI, Gabriele, 25030 Roncadelle, Brescia (IT)
(74) Representative: Pulieri, Gianluca Antonio
(86) International application number: PCT/IB2019/056643
(87) International publication number: WO 2020/031060

(56) References cited:
- EP-A1- 1 134 306
- WO-A1-2017/199147
- CN-B- 106 350 689
- FR-A- 1 051 683
- US-A- 2 825 644
- ATSUSHI NAKANO ET AL: "Removal of Lead from Copper Alloy Scraps by Compound-Separation Method", MATERIALS TRANSACTIONS, vol. 46, no. 12, 15 December 2005 (2005-12-15), pages 2719-2724, XP055574044, JP ISSN: 1345-9678, DOI: 10.2320/matertrans.46.2719

## Description

The subject of the present invention is a method for obtaining a brass billet and a brass billet thus obtained. In particular, the subject of the present invention is a brass billet with a reduced lead content.

By convention, brass is defined as "lead-free" if the lead content is less than 0.1% by weight; it is defined as "low lead content" if the lead content is between 0.1% and 0.2% by weight. Traditional brass, on the other hand, normally has a lead content varying between 1.5% and 3.5%.

As is well known, brass, an alloy of copper (Cu) and zinc (Zn), is a material widely used in the manufacturing industry, due, above all, to its excellent castability, which makes it possible to obtain semi-finished castings by means of melting processes, and to its excellent tool machinability, which makes it possible to finish the semi-finished product in a suitable manner by means of machining by chip removal.

The machinability of brass is highly dependent on the amount of lead (Pb) therein.

For some years now, however, there has been a need to manufacture certain products, such as taps or other components in contact with water, especially if potable, with lead-free alloys or alloys with a very low lead content. The main reason for this is the need to prevent lead from being dissolved in water, with consequences considered harmful to health.

The research and development efforts of many companies are therefore aimed at the definition of a lead-free brass which has mechanical characteristics and workability similar to those of traditional brass.

In this direction, one of the most promising approaches is the replacement of lead with graphite powder. In this regard, the Applicant is the holder of the Italian patent application for invention No. 10 2013 9021 8136 5.

Further research efforts are focused on how to obtain lead-free brass fragments to be mixed with graphite powder. In this context, the Applicant is the holder of the International Application WO-A1-2017/199147, which illustrates the obtaining of lead-free brass fragments from lead-free brass chips from mechanical machining by chip removal to which lead-free brass products are subjected.

FR1051683 discloses a method to remove lead from non ferrous alloys by immersing such alloys in particulate form into a solution of nitric acid and a surfactant. US2825644 discloses a method to remove lead from finely divided scrap of copper base alloys so as to permit the scrap to be remelted in order to produce ingots that are relatively low in lead. Nitric acid is used as the substantially sole reagent.

EP1134306 discloses a process of deleading selectively plumbing components made of a lead-containing copper alloy, comprising a step of dipping the plumbing components into a bath containing at least one of formic acid, acrylic acid, propionic acid and butyric acid.

The present invention concerns on the other hand an innovative method for obtaining brass billets with a reduced lead content compared to the usual one, and the billet thus obtained. According to the invention, traditional brass chips (i.e. with normal lead content) are chemically and mechanically treated to lower their lead content.

The characteristics and advantages of the method according to the present invention will be apparent from the description provided hereinafter.

According to the invention as defined in claim 1, a method for obtaining brass billets with reduced lead content provides for a step of obtaining traditional brass chips.

Said traditional brass chips are the result of mechanical machining by chip removal performed on semi-finished or finished products made of traditional brass.

According to the type of traditional brass of which the finished or semi-finished product is composed and according to the type of mechanical processing from which it derives, the chip takes on the characteristic curled shape or a more shredded appearance.

The method further provides for subjecting traditional brass chips, after washing to remove dirt and pollutants such as cooling fluids and/or lubricants if necessary, to a mechanical fragmentation treatment, aimed at increasing the ratio between the total surface area of the chips and the overall volume occupied. From the fragmentation treatment, traditional brass fragments are obtained.

Preferably, said mechanical fragmentation treatment consists of a grinding of the traditional chips.

Subsequently, the traditional chip fragments are subjected to a chemical treatment to reduce the lead content.

Said chemical treatment consists of a lead removal performed by immersing the fragments of traditional brass in a bath with a solution of water and one or more organic acids.

For example, said organic acids are selected from the group comprising butyric acid, propionic acid, 2-propenoic acid, acrylic acid.

Preferably, the lead removal bath is agitated, e.g. by ultrasound or mechanically.

The lead removal treatment produces brass fragments with a reduced lead content.

According to the invention, if the brass fragments subjected to the lead removal bath do not have a sufficiently low lead content, the fragmentation treatment and lead removal treatment are performed again, recursively.

According to one variant execution of the method, the lead removal treatment is performed on traditional, non-fragmented brass chips, and the subsequent fragmentation treatment (and further lead removal) is performed if the lead content of the chips subjected to the previous lead removal is not sufficiently low.

According to the invention, the fragments are subjected to a pressing before a further fragmentation treatment is carried out. Advantageously, this allows the external surface of the fragments, on which the lead removal treatment mainly acts, to be increased.

According to a further variant execution of the method, several fragmentation treatments and subsequent pressings are carried out recursively, before a lead removal treatment is carried out.

The brass fragments with reduced lead content finally obtained are used as charge for a melting furnace, preferably together with substantially pure copper and zinc (e.g. copper foil and zinc cakes) and/or further brass scrap, to obtain a melting bath having a desired metallurgical composition.

The molten metal is used to obtain a billet by means of direct or inverted extrusion.

The billet obtained according to the method described above is then used to obtain a bar having the desired diameter and length.

The bar is then subjected by the user to mechanical machining by chip removal and the brass chips thus obtained are then again subjected to the method according to the invention. In this way, by working recursively, the brass will progressively assume an increasingly lower lead content.

Innovatively, the method according to the present invention is extremely advantageous from an industrial point of view, as it allows the use of traditional brass chips, i.e. with a normal lead content, to obtain brass billets with a reduced lead content.

In addition, advantageously, the use of chips allows machining by chip removal in a remote plant, usually by the user of the bar, in order to produce a semi-finished or finished product, and the fragmentation of the chips and the lead removal bath in a main plant. The chips are transported from the remote plant to the main plant.

Otherwise, advantageously, the machining step for chip removal is performed in a first remote plant, usually by the user of the bar, in order to produce a semi-finished or finished product, the traditional brass chips are transported to a second remote plant, the fragmentation and lead removal treatments are performed in said second remote plant. Finally, the brass fragments with reduced lead content are transported to a main plant where they are melted, and the new billet is created.

## Claims

1. Method for obtaining a brass billet with a lead content reduced to less than 1.5% by weight, comprising the steps of
- performing mechanical machining by chip removal on a finished or semi-finished product constituted of traditional brass, obtaining traditional brass chips;
- performing on said traditional brass chips a fragmentation treatment to obtain traditional brass fragments;
- performing on said traditional brass fragments a lead removal treatment in order to obtain brass fragments with a reduced lead content, wherein the lead removal treatment consists of a lead removal bathing in a solution of water and one or more organic acids;
- in a furnace, melting a charge comprising said brass fragments with reduced lead content;
- obtaining a billet by means of direct or inverted extrusion of a cast of the molten product;
wherein, if the lead content of the brass fragments with reduced lead content is not low enough, a further fragmentation and a further lead removal treatment is performed and, prior to the further fragmentation treatment, the brass fragments to be subjected to the fragmentation treatment are pressed.

2. Method according to claim 1, wherein the lead removal bathing is agitated.

3. Method according to claim 2, wherein the lead removal bathing is agitated by ultrasound.

4. Method according to any one of the preceding claims, wherein the fragmentation treatment consists of grinding.

5. Method according to anyone of the preceding claims, wherein the organic acids are selected from the group comprising butyric acid, propionic acid, acrylic acid.

## Patentansprüche

1. Verfahren zur Herstellung eines Messingbarrens mit einem Bleigehalt, der auf weniger als 1,5 Gew.-% verringert ist, umfassend die Schritte:
- Durchführen einer mechanischen Bearbeitung durch Spanabtragung an einem Fertig- oder Halbfertigprodukt, gebildet aus herkömmlichem Messing, wobei Späne aus herkömmlichem Messing erhalten werden;
- Durchführen einer Fragmentierungsbehandlung an den Spänen aus herkömmlichem Messing, um Fragmente aus herkömmlichem Messing zu erhalten;
- Durchführen einer Bleientfernungsbehandlung an den Fragmenten aus herkömmlichem Messing, um Fragmente aus Messing mit einem verringerten Bleigehalt zu erhalten, wobei die Bleientfernungsbehandlung aus einem Bleientfernungsbad besteht, in einer Lösung aus Wasser und einer oder mehreren organischen Säuren;
- Schmelzen einer Charge, umfassend die Fragmente aus Messing mit reduziertem Bleigehalt in einem Ofen;
- Erhalten eines Barrens mittels direkter oder invertierter Extrusion eines Gusses des geschmolzenen Produkts;
wobei, wenn der Bleigehalt der Fragmente aus Messing mit reduziertem Bleigehalt nicht gering genug ist, eine weitere Fragmentierungs- und eine weitere Bleientfernungsbehandlung durchgeführt werden und, vor der weiteren Fragmentierungsbehandlung, die der Fragmentierungsbehandlung zu unterwerfenden Fragmente aus Messing gepresst werden.

2. Verfahren nach Anspruch 1, wobei das Bleientfernungsbad bewegt wird.

3. Verfahren nach Anspruch 2, wobei das Bleientfernungsbad durch Ultraschall bewegt wird.

4. Verfahren nach einem der vorhergehenden Ansprüche, wobei die Fragmentierungsbehandlung aus Mahlen besteht.

5. Verfahren nach einem der vorhergehenden Ansprüche, wobei die organischen Säuren ausgewählt sind aus der Gruppe umfassend Buttersäure, Propionsäure, Acrylsäure.

## Revendications

1. Procédé d'obtention d'une billette de laiton à une teneur en plomb réduite à moins de 1,5 % en poids, comprenant les étapes de
- effectuer un traitement mécanique par enlèvement d'éclats sur un produit fini ou semi-fini constitué de laiton traditionnel, obtenant des éclats traditionnels de laiton ;
- effectuer sur les éclats traditionnels de laiton un traitement de fragmentation pour obtenir des fragments traditionnels de laiton ;
- effectuer sur les éclats traditionnels de laiton un traitement d'enlèvement de plomb afin d'obtenir des fragments de laiton ayant une teneur en plomb réduite, le traitement d'enlèvement de plomb étant constitué d'un bain d'enlèvement de plomb dans une solution aqueuse d'un ou de plusieurs acides organiques ;
- fondre une charge comportant les fragments de laiton à teneur réduite en plomb, dans un four ;
- obtenir une billette moyennant une extrusion directe ou inversée d'une coulée du produit fondu ;
**caractérisé en ce que**, lorsque la teneur en plomb des éclats de laiton à teneur réduite en plomb n'est pas suffisamment basse, un nouveau traitement de fragmentation et d'enlèvement de plomb est effectué et, avant le traitement de fragmentation, les fragments de laiton destinés à être soumis au traitement de fragmentation, sont pressés.

2. Procédé selon la revendication 1, **caractérisé en ce que** le bain d'enlèvement de plomb est agité.

3. Procédé selon la revendication 2, **caractérisé en ce que** le bain d'enlèvement de plomb est agité par des ultrasons.

4. Procédé selon l'une des revendications précédentes, **caractérisé en ce que** le traitement de fragmentation est constitué de broyage.

5. Procédé selon l'une des revendications précédentes, **caractérisé en ce que** les acides organiques sont choisis dans le groupe comprenant de l'acide butyrique, de l'acide propionique, de l'aide acrylique.
